# EUROPÄISCHE PATENTSCHRIFT

(11) **EP 2 406 513 B1**
(45) Veröffentlichungstag und Bekanntmachung des Hinweises auf die Patenterteilung: **07.05.2014**
(21) Anmeldenummer: 10718037.4
(22) Anmeldetag: 12.03.2010
(51) Int. Cl.: F16D 3/68, F16F 15/124

(54) **SCHWINGUNGSDÄMPFER FÜR EINEN ANTRIEBSSTRANG**
VIBRATION ABSORBER FOR A DRIVE TRAIN
AMORTISSEUR DE VIBRATIONS POUR TRANSMISSION

(30) Priorität: 13.03.2009 DE 102009013082; 11.12.2009 DE 102009057914
(43) Veröffentlichungstag der Anmeldung: 18.01.2012
(73) Patentinhaber: Neumayer Tekfor Holding GmbH, 77756 Hausach (DE)
(72) Erfinder: LEHMANN, Martin, 78132 Hornberg (DE)
(86) Internationale Anmeldenummer: PCT/DE2010/000261
(87) Internationale Veröffentlichungsnummer: WO 2010/102611

(56) Entgegenhaltungen:
- EP-A1- 0 141 003
- DE-A1- 1 475 519
- DE-A1- 1 575 892
- DE-A1- 2 336 121
- DE-A1- 4 426 371
- FR-A- 1 128 208
- US-A- 5 460 574
- US-A1- 2002 190 450
- US-A1- 2005 192 103

## Beschreibung

Die Erfindung betrifft einen Schwingungsdämpfer für eine Welle eines Antriebsstrangs mit einem ersten Wellenteil und einem zweiten Wellenteil sowie einem zwischen den Wellenteilen angeordneten elastisch verformbaren Dämpfungsteil, das jeweils drehschlüssig von den beiden Wellenteilen beaufschlagt wird, wobei das erste Wellenteil eine Hülse mit nach radial innen gerichteten Drehmitnahmen für das Dämpfungsteil aufweist, wobei das zweite Wellenteil ein Innenteil mit nach radial außen gerichteten Drehmitnahmen für das Dämpfungsteil aufweist, wobei die Hülse und das Innenteil derartig ausgestaltet und aufeinander abgestimmt sind, dass das Innenteil mit einem Endbereich von der Hülse umfasst ist, wobei das Dämpfungsteil radial zwischen Hülse und Innenteil angeordnet ist, wobei das Dämpfungsteil den Endbereich des Innenteils umfasst, und wobei das Dämpfungsteil Negativprofile aufweist, in die die Drehmitnahmen eingreifen.

Besondere Schwingungsdämpfer sind im Stand der Technik als sogenannte Hardy-Scheiben bekannt. Die DE 93 13 417 U1 zeigt hierzu einen entsprechenden Aufbau. Hierbei werden zwei radial erweiterte, jeweils an einem Wellenteil oder einem anderen die Drehung der Welle übertragenden Teil angeordnete Flanschteile über den Umfang abwechselnd mit einer elastischen, beispielsweise aus einem Gummi-/Stahl- oder Nylongeflechtverbund bestehenden Scheibe verbunden. Die elastische Scheibe dient dabei als Drehmomentdämpfer zum Auffangen von Drehmomentschlägen oder Schwingungen, sowie zum Ausgleich eines geringen Winkel- oder Axialversatzes zwischen den den Flanschteilen zugeordneten Bauteilen. Um das erforderliche Drehmoment über eine derartige Dämpfereinheit übertragen zu können, muss infolge der auf die elastische. Scheibe wirkenden Umfangskräfte der Durchmesser der elastischen Scheibe entsprechend dimensioniert werden, so dass gegenüber dem Durchmesser der Welle ein mehrfacher Durchmesser der Dämpfereinheit vorgesehen und im entsprechenden Bauraum berücksichtigt werden muss. Durch die hohe Flächenpressung an den Übergangsstellen zwischen den Flanschteilen und der elastischen Scheibe kommt es durch die entstehende Walkarbeit zu einer unerwünschten Wärmeentwicklung und zu hohen Anforderungen an die Stabilität der elastischen Scheibe.

Eine aktive Schwingungsdämpfung von Antriebswellen beschreibt die Schrift DE 601 28 851 T2. Dabei wird in Abhängigkeit von den Messungen eines Wellendrehzahlsensors aus einem Verbundwerkstoff mit piezoelektrischen Eigenschaften ein jeweils passender Gegenschwinger erzeugt. Diese Ausgestaltung ist sehr aufwändig und kostenintensiv. Bei Klauenkupplungen ist es im Stand der Technik bekannt, zwischen den ineinander eingreifenden Klauen elastische Formteile vorzusehen (z.B. DE 25 42 948 A1 oder DE 298 06 632 U1). Die Offenlegungsschrift DE 197 55 307 A1 beschreibt eine Antriebswelle mit einer elastischen Abstützung, welche in zueinander senkrechten Richtungen unterschiedliche Steifigkeiten aufweist. Weiterhin ist im Stand der Technik eine Kupplungsvorrichtung mit zwei Kupplungselementen bekannt, wobei ein Kupplungselement eine röhrenförmige Umfangswand aufweist, in welche Arme des anderen Kupplungselements hineinragen und welche ein Dämpfungsteil umfasst (DE 10 2007 025 953 A1). Ein ebenfalls solides Dämpfungsteil ist in der FR 1.128.208 zwischen zwei teilweise ineinander angeordneten Wellenabschnitten angebracht. Einen weiteren Schwingungsdämpfer gemäß der Präambel von Anspruch 1 zeigt die US 2005/0192103 A1.

Im Stand der Technik werden somit zwischen Wellenabschnitten Dämpfungsteile zur Schwingungsdämpfung angebracht, wobei das Dämpfungsteil ggf. einen Bereich eines ersten Wellenabschnitts umfasst und der zweite Wellenabschnitt das Dämpfungsteil und den Bereich des ersten Wellenabschnitts umschließt. Nachteilig am Stand der Technik ist, dass die Dämpfungseigenschaften der solide und homogen ausgestalteten Dämpfungsteile allein von den Materialeigenschaften des für das Dämpfungsteil verwendeten Materials bestimmt sind. Daher lässt sich die Dämpfung nur beschränkt vorgeben bzw. einstellen.

Es ergibt sich daher die Aufgabe, einen Schwingungsdämpfer vorzuschlagen, dessen Dämpfungseigenschaften einstellbar sind.

Die Aufgabe wird durch die Merkmale des kennzeichnen Teils von Anspruch 1 gelöst.

Die Lösungsführende Ausgestaltung des erfindungsgemäßen Schwingungsdämpfers beinhaltet, dass das Dämpfungsteil in Schichtbauweise aus zumindest zwei über den Umfang abwechselndenSchichten unterschiedlicher Elastizität gebildet ist. Solche Schichten oder - wie später beschrieben wird - Ringe weisen in einer Ausgestaltung unterschiedliche Geometrien auf und bestehen zusätzlich oder alternativ aus unterschiedlichen Materialien. Durch unterschiedliche Materialien ist vor allem eine nicht homogene Struktur vorgegeben, welche sich entsprechend auf die Steifigkeit und die Dämpfungseigenschaften des Dämpfungsteils auswirken. Die Schichten bzw. Ringe und die Geometrie insbesondere der Aussparungen sind somit Möglichkeiten, die einzeln oder in Kombination zur Einstellung des Dämpfungsverhaltens herangezogen werden können.

Diese Ausgestaltung sieht auch vor, dass das Dämpfungsteil gleichzeitig oder auch aus zumindest zwei axial hintereinander angeordneten Ringen gebildet ist. Eine Ausgestaltung des erfindungsgemäßen Schwingungsdämpfers beinhaltet, dass die zumindest zwei axial hintereinander angeordneten Ringe unterschiedliche Elastizität aufweisen.

Eine Ausgestaltung des erfindungsgemäßen Schwingungsdämpfers sieht vor, dass die Drehmitnahmen als sich längs der Drehachse des Schwingungsdämpfers erstreckende Längsrippen ausgebildet sind, die in die als komplementäre Längsnuten des Dämpfungsteils ausgebildete Negativprofile eingreifen.

Eine Ausgestaltung des erfindungsgemäßen Schwingungsdämpfers beinhaltet, dass das Dämpfungsteil zusätzlich zu den Negativprofilen Aussparungen aufweist. Diese Aussparungen unterbrechen somit zusätzlich zu den Negativprofilen noch den Aufbau des Dämpfungsteils und bestimmen damit auch dessen Eigenschaften. Somit ist durch die Aussparungen die Geometrie der Außenseite des Dämpfungsteils nicht gleich der eines Zylinders geschlossen und nicht mehr kontinuierlich. Diese Ausgestaltung bezüglich der Geometrie kann erweitert werden durch den Materialaufbau des Dämpfungsteils, indem unterschiedliche Materialien kombiniert werden. Hierfür ist das Dämpfungsteil in einer Ausgestaltung aus Streifen und/oder Ringen zusammengesetzt, welche gemeinsam das Dämpfungsteil bilden.

Eine Ausgestaltung des erfindungsgemäßen Schwingungsdämpfers sieht vor, dass die Aussparungen als im Wesentlichen axial längs der Drehachse verlaufende Nuten ausgestaltet sind. Die als Nuten ausgestalteten Aussparungen sind in dieser Ausgestaltung somit im Wesentlichen auch Längsnuten wie die Negativprofile in einer Ausgestaltung.

Die Aussparungen können insbesondere unterschiedliche ausgestaltet sein, so dass auch unterschiedlich ausgestaltete Gruppen von Aussparungen bei einem Dämpfungsteil gemeinsam vorhanden sind. Die Ausgestaltungen der Aussparungen können sich somit sowohl auf einzelne, als auch auf Gruppen von Aussparungen, als auch auf alle vorhandenen Aussparungen beziehen.

Eine Ausgestaltung des erfindungsgemäßen Schwingungsdämpfers beinhaltet, dass die als Nuten ausgestalteten Aussparungen sich in Richtung der Hülse öffnend ausgestaltet sind. Die nutenartigen Aussparungen sind somit in dieser Ausgestaltung von ihrem Grund her radial nach außen gehend ausgestaltet. Eine Ausgestaltung des erfindungsgemäßen Schwingungsdämpfers sieht vor, dass die als Nuten ausgestalteten Aussparungen sich in Richtung des Innenteils öffnend ausgestaltet sind. In dieser Ausgestaltung verlaufen die Aussparungen ausgehend von ihrem Grund radial nach innen.

Eine Ausgestaltung des erfindungsgemäßen Schwingungsdämpfers beinhaltet, dass die Aussparungen und die Negativprofile radial umlaufend miteinander abwechselnd vorgesehen sind. Eine Ausgestaltung des erfindungsgemäßen Schwingungsdämpfers sieht vor, dass die Aussparungen und die Negativprofile derartig radial umlaufend miteinander abwechselnd vorgesehen sind, dass die Aussparungen und die Negativprofile sich abwechselnd in Richtung der Hülse und in Richtung des Innenteils öffnen. In einer Variante wechseln sich die Aussparungen und Negativprofile jeweils direkt miteinander ab. In einer weiteren Variante wechseln sich unterschiedliche Anzahlen von Aussparungen und Negativprofilen miteinander ab.

Eine Ausgestaltung des erfindungsgemäßen Schwingungsdämpfers beinhaltet, dass die als Nuten ausgestalteten Aussparungen im Wesentlichen die gleiche radiale Tiefe wie die Negativprofile aufweisen. Eine Ausgestaltung des erfindungsgemäßen Schwingungsdämpfers sieht vor, dass die als Nuten ausgestalteten Aussparungen eine größere radiale Tiefe als die Negativprofile aufweisen.

Eine Ausgestaltung des erfindungsgemäßen Schwingungsdämpfers beinhaltet, dass die als Nuten ausgestalteten Aussparungen einen zu einer Flächennormalen des Dämpfungsteils geneigten Verlauf aufweisen. Eine Ausgestaltung des erfindungsgemäßen Schwingungsdämpfers sieht vor, dass die als Nuten ausgestalteten Aussparungen in radialer Richtung im Wesentlichen eine konstante Breite aufweisen. Eine Ausgestaltung des erfindungsgemäßen Schwingungsdämpfers beinhaltet, dass die als Nuten ausgestalteten Aussparungen auf ihrem Grund eine Verbreiterung aufweisen.

Eine Ausgestaltung des erfindungsgemäßen Schwingungsdämpfers sieht vor, dass die als Nuten ausgestalteten Aussparungen längs der Drehachse unterbrochen sind. Die Nuten sind somit in Richtung der Längs- bzw. Drehachse nicht komplett durchgehend.

In einer Ausgestaltung ist die Drehachse eine Symmetrieachse des Dämpfungsteils.

Eine Ausgestaltung des erfindungsgemäßen Schwingungsdämpfers beinhaltet, dass die Drehmitnahmen und die jeweils zugeordneten Negativprofile derartig ausgestaltet und aufeinander abgestimmt sind, dass sich zwischen den Drehmitnahmen und den jeweiligen Negativprofilen unterschiedliches Spiel ergibt.

Eine Ausgestaltung des erfindungsgemäßen Schwingungsdämpfers sieht vor, dass die Aussparungen als in axialer Richtung an die Negativprofile angrenzende Taschen ausgestaltet sind. Eine Ausgestaltung des erfindungsgemäßen Schwingungsdämpfers beinhaltet, dass in den als Taschen ausgestalteten Aussparungen mindestens ein Füllmaterial vorgesehen ist, wobei das Füllmaterial weicher als das Dämpfungsteil ist. Eine Ausgestaltung des erfindungsgemäßen Schwingungsdämpfers sieht vor, dass die als Taschen ausgestalteten Aussparungen und das Füllmaterial derartig ausgestaltet und aufeinander abgestimmt sind, dass ein Verdrängungsraum für das Füllmaterial vorhanden ist. Unter Belastung kann sich das Füllmaterial somit in den Verdrängungsraum einpassen.

Eine Ausgestaltung des erfindungsgemäßen Schwingungsdämpfers beinhaltet, dass zumindest ein Teil der Negativprofile zumindest abschnittsweise eine in axialer Richtung wellenförmige Struktur aufweist. Die Seitenwände der Negativprofile sind somit längs der Drehachse wellig ausgestaltet.

Eine Ausgestaltung des erfindungsgemäßen Schwingungsdämpfers sieht vor, dass das Dämpfungsteil als separates Bauteil ausgestaltet ist.

Eine Ausgestaltung des erfindungsgemäßen Schwingungsdämpfers sieht vor, dass eine Schicht geringer Elastizität das Negativprofil aufweist und benachbart zu dieser jeweils eine Schicht höherer Elastizität angeordnet ist. Eine Ausgestaltung des erfindungsgemäßen Schwingungsdämpfers beinhaltet, dass eine Flächenpressung zwischen Drehmitnahmen und Negativprofilen höher ist als eine Flächenpressung zwischen Grenzflächen und Gegenflächen der Schichten unterschiedlicher Elastizität.

Eine Ausgestaltung des erfindungsgemäßen Schwingungsdämpfers sieht vor, dass die zumindest zwei axial hintereinander angeordneten Ringe unterschiedlich ausgestaltete Aussparungen axial hintereinander aufweisen.

Eine Ausgestaltung des erfindungsgemäßen Schwingungsdämpfers beinhaltet, dass das Dämpfungsteil axial zwischen den beiden Wellenteilen fixiert oder verspannt ist. Eine Ausgestaltung des erfindungsgemäßen Schwingungsdämpfers sieht vor, dass das Dämpfungsteil zumindest an einer Stirnseite eine axial elastische Dämpfungsscheibe aufweist. Durch die Anordnung des elastischen Dämpfungsteiles radial zwischen den beiden Wellenteilen mit einer zur Übertragung des Drehmoments axialen Länge können radial um ein Mehrfaches gegenüber dem Wellendurchmesser erweiterte Flansche, zwischen denen das elastische Dämpfungsteil angeordnet ist, entfallen. Da in den meisten Anwendungen die axiale Erstreckung einer Welle sowieso gegeben ist und daher nicht bauraumrelevant ist, kann durch den vorgeschlagenen, den Wellendurchmesser nur unwesentlich erweiternden Schwingungsdämpfer radialer Bauraum gespart werden. Infolge der besseren Führung der beiden Wellenteile zueinander wird Walkarbeit vermieden, so dass sich weniger Wärme entwickelt und daher ein höherer Wirkungsgrad erzielt wird. Der Schwingungsdämpfer hat beispielsweise auch den Vorteil, dass er mit einem geringen Bauraum auskommt.

Durch die sogenannte Tube-in-Tube-Anordnung der Wellenteile mit dem Dämpferteil wird ein hohes Maß an Gleichlauf und Wuchtgüte erzielt. Die Teile sind aufeinander selbstzentrierend so dass eine Zentrierung während der Montage der Wellenteile aufeinander entfallen kann.

Das Dämpfungsteil kann aus Kunststoff, einer Gummimischung, die mit Fasern oder dergleichen verstärkt sein kann oder aus anderen elastischen Stoffen gebildet sein. In einer Ausgestaltung handelt es sich bei dem Dämpfungsteil um ein einstückiges, steckbares Bauteil. In einer anderen Ausgestaltung ist das Dämpfungsteil zumindest teilweise auf das Innenteil oder die Hülse aufgebracht, z.B. aufgespritzt. In einer Variante ist es vorgesehen, dass das Dämpfungsteil in Schichtbauweise aus zumindest zwei über den Umfang abwechselnden Schichten unterschiedlicher Elastizität gebildet ist. Gemäß einem Ausführungsbeispiel hat es sich als vorteilhaft erwiesen, das Dämpfungsteil aus mehreren, vorzugsweise zwei Materialsorten beispielsweise in einem Sandwichverfahren herzustellen. Hierbei können in bevorzugter Weise zwei Kunststoffe oder Gummimischungen mit unterschiedlicher Elastizität zu einem Dämpfungsteil kombiniert werden. Eine Ausgestaltung ist derart, dass eine Schicht geringer Elastizität das Negativprofil aufweist und benachbart zu dieser jeweils eine Schicht höherer Elastizität angeordnet ist. Hierbei kann das Material mit geringerer Elastizität und höherer Festigkeit die Kontaktfläche zu den Wellenteilen, die bevorzugt aus Metall hergestellt sind, bilden, während das elastischere und weniger steife Material Dämpfungszonen bildet und mit dem härteren Material in Kontakt tritt. Auf diese Weise kann das Dämpfungsteil über den Umfang verteilte und sich bezüglich ihrer Elastizität über den Umfang abwechselnde Zylindersegmente enthalten, die im Wesentlichen entlang dem Verlauf der Drehmitnahmen ausgerichtet sind, so dass die mit den Drehmitnahmen in Wirkeingriff tretenden, die Negativprofile aufweisenden Zylindersegmente jeweils aus Material mit höherer Steifigkeit gebildet werden und die dazwischen angeordneten Zylindersegmente aus Material mit höherer Elastizität gebildet sind. Beispielhaft ist vorgesehen, dass eine Flächenpressung zwischen Drehmitnahmen und Negativprofilen höher als eine Flächenpressung zwischen Grenzflächen und Gegenflächen der Schichten unterschiedlicher Elastizität ist. Insgesamt erfolgt auf diese Weise eine Selbstzentrierung in besonders vorteilhafter Weise, indem die Teile mit geringerer Elastizität die Selbstzentrierung an der Hülse und gegenüber dem Innenteil bewirken und die Teile mit höherer Elastizität auf ihre Dämpfungseigenschaften ausgelegt werden können und daher keine Zentrierfunktion ausüben müssen.

In alternativen bzw. ergänzenden Ausgestaltungen ist vorgesehen, dass das Dämpfungsteil aus zumindest zwei axial hintereinander angeordneten Ringen, insbesondere unterschiedlicher Elastizität, gebildet ist.

Eine Variante sieht vor, dass die Drehmitnahmen als sich längs der Drehachse des Schwingungsdämpfers an der Hülse angeordnete Längsrippen ausgebildet sind, die in die als komplementäre Längsnuten des Dämpfungsteils ausgebildete Negativprofile eingreifen. Die Drehmitnahmen des ersten und zweiten Wellenteils können radial gegenüber diesen in Richtung des Dämpfungsteils erweiterte Profile sein, die zumindest teilweise einen Axialanteil aufweisen und mit diesem das Dämpfungsteil in Drehrichtung der Welle mitnehmen. Die Drehmomentmitnahmen des ersten Wellenteils können dabei über den Umfang mit Drehmitnahmen des zweiten Wellenteils abwechseln, so dass das Dämpfungsteil nicht durch sich radial gegenüberliegenden Drehmitnahmen geschwächt wird. Es hat sich aus Gründen einer einfachen Herstellung der Wellenteile durch Umformung von Rohrteilen als vorteilhaft erwiesen, die über den Umfang verteilten Längsrippen umformend aus dem Rohrmaterial herzustellen. Die Längsrippen verlaufen dabei in einer Ausgestaltung im Wesentlichen parallel zur Drehachse der Wellenteile. Diese Längsrippen bilden mit den vorzugsweise als Längsnuten ausgestalteten Negativprofilen des Dämpfungsteils einen Formschluss in Drehrichtung der Welle, so dass bei in die Welle eingetragenen Schwingungsanteilen und daraus resultierenden Relativverdrehungen der beiden Wellenteile gegeneinander insbesondere die elastischen Bereiche des Dämpfungsteils in Drehrichtung komprimiert werden. Diese nehmen Energie durch Verformung auf und geben diese in Form von Wärme und/oder bei Abbau der Relativverdrehung wieder ab, so dass ein Dämpfungseffekt in Drehrichtung bewirkt wird. Die Art und Ausgestaltung der Drehmitnahmen kann weitgehend frei vorgesehen werden, so können die Längsrippen beispielsweise einen rechteckigen oder gerundeten Querschnitt aufweisen.

Dabei erfolgt durch die Verwendung unterschiedlich elastischer Materialien bevorzugt eine Flächenpressung der Drehmitnahmen gegenüber dem härteren Material einerseits und eine Flächenpressung des härteren Materials gegenüber dem elastischeren Material andererseits. Die Flächenanteile zwischen den Drehmitnahmen und den Negativprofilen werden dabei entsprechend kleiner ausgelegt als die Flächenanteile der unterschiedlichen Materialien des Dämpfungsteils, so dass durch die Auswahl und Anordnung der verschiedenen Materialien eine geringere Flächenpressung an dem elastischen Material erzielt wird, während durch die Verwendung eines steiferen Materials zur Drehmomentübertragung von den Wellenteilen in das Dämpfungsteil eine höhere Flächenpressung eingestellt und daher kleinere Kontaktflächen erzielt werden können.

In einer Ausgestaltung ist vorgesehen, dass das Dämpfungsteil zusätzlich zu den Negativprofilen Aussparungen aufweist. Eine Umsetzung dieser Ausgestaltung beinhaltet, dass die Aussparungen als im Wesentlichen axial verlaufende Nuten ausgestaltet sind. Der Schwingungsdämpfer kann in der Welle nahezu beliebig angeordnet werden, beispielsweise zwischen zwei Wellenabschnitten oder an einem Ende dieser. Mehrere Schwingungsdämpfer können axial beabstandet zueinander auf einer Welle und/oder in mehreren Wellen des Antriebsstrangs angeordnet sein. Zur drehschlüssigen Verbindung des Schwingungsdämpfers mit Wellenabschnitten und/oder Wellenanschlüssen an eine andere Welle können jeweils an der freien Stirnseite der Wellenteile Anschlussprofile vorgesehen sein, beispielsweise Verzahnungen, Gewinde und dergleichen. Dabei können die einzelnen Wellenteile fest oder trennbar miteinander verbunden werden.

Als besonders vorteilhaft hat es sich erwiesen, wenn der Schwingungsdämpfer einen Winkelausgleich und/oder eine axiale Verschiebeeinheit aufweist. In einer Ausgestaltung ist vorgesehen, dass ein Wellenteil über einem anderen, aus einer Wellenachse verschwenkbar und/oder axial verlagerbar ist. Ein Winkelausgleich kann beispielsweise mittels eines Kreuzgelenks oder dergleichen erfolgen, wobei sich ein Wellenteil gegenüber einem beispielsweise in der Rotationsachse als Wellenachse verbleibenden Wellenteil um einen Knickwinkel verschwenken lässt. Als besonders vorteilhaft hat sich die Kombination des Schwingungsdämpfers mit einem Gleichlaufgelenk erwiesen, wobei dieses an dem ersten oder zweiten Wellenteil beispielsweise drehfest aufgenommen ist, indem es beispielsweise mittels einer entsprechenden Profilierung, beispielsweise an den bereits zur Beaufschlagung des Dämpfungsteils vorgesehenen Drehmitnahmen, drehfest an diesem aufgenommen und gegen einen Axialanschlag axial fixiert, beispielsweise verbördelt wird. Dabei kann vorteilhaft sein, wenn das vorzugsweise geschmierte Gleichlaufgelenk gegenüber dem Dämpfungsteil gekapselt ist. Unter anderem in diesem Zusammenhang kann zwischen dem Gleichlaufgelenk und dem Dämpfungsteil eine Dichtscheibe angeordnet sein. Die Dichtscheibe kann in vorteilhafter Weise auch aus einem Bodenteil der Hülse gebildet sein, so dass kein zusätzlicher Teilebedarf entsteht. Durch die Verwendung eines Gleichlaufgelenks im Schwingungsdämpfer können große Beugungswinkel vorgesehen werden, die auf Dauer ohne Schädigung des Dämpferteils eingehalten werden können. Weiterhin wird selbst bei größeren Beugewinkeln ein sehr guter Gleichlauf erzielt. In ähnlicher Weise können nicht nur Kugelfestgelenke sondern auch Gleichlaufgelenke mit Verschiebegelenken und/oder Verschiebeeinheiten als Rollenausgleiche vorgesehen werden.

Gemäß einem weiteren vorteilhaften Ausführungsbeispiel kann der Schwingungsdämpfer zusätzlich eine Axialdämpfung aufweisen, indem das Dämpfungsteil axial zwischen den beiden Wellenteilen fixiert oder verspannt ist. Hierbei können Vorkehrungen getroffen werden, dass das Dämpfungsteil axial elastische Anteile aufweist. Diese können bereits in SandwichBauweise vorgesehen werden, die an einer oder beiden Stirnseiten und/oder dazwischen vorgesehen sein können, indem das Dämpfungsteil in zwei oder mehrere Abschnitte geteilt wird oder entsprechend elastische Bereiche in diesem vorgesehen werden. Alternativ oder zusätzlich können an dem Dämpfungsteil stirnseitig oder dazwischen eine oder mehrere axial elastische Dämpfungsscheiben vorgesehen werden, die von entsprechenden stirnseitigen Anschlagflächen der Wellenteile bei Axialbelastungen beaufschlagt werden. Der axiale Dämpfungsweg kann dabei begrenzt sein, indem die Wellenteile aufeinander auflaufen, um die axial elastisch wirksamen Bereiche vor Beschädigung bei Extrembelastung zu schützen.

Die Erfindung betrifft auch eine Antriebswelle, die beispielsweise in einem Antriebsstrang eines Kraftfahrzeugs als Längswelle und/oder Seitenantriebswelle eingesetzt werden kann, wobei diese jeweils drehschlüssige Endbereiche zur drehschlüssigen Verbindung mit weiteren Anschlussbauteilen des Antriebsstrangs wie beispielsweise Getriebeausgangswellen, Differenzialein- oder -ausgangswellen, Radnaben und dergleichen aufweist und zwischen diesen der zuvor beschriebene Schwingungsdämpfer angeordnet ist. Nach dem erfinderischen Gedanken kann dabei axial beabstandet zu dem Schwingungsdämpfer ein axialer Längenausgleich der Antriebswelle vorgesehen sein, der beispielsweise als Verschiebeeinheit mit einer auf einem Wellenabschnitt angeordneten Innenverzahnung, einem weiteren Wellenabschnitt mit einer Außenverzahnung und radial zwischen diesen angeordneten Wälzkörpern ausgebildet ist. In einer Ausgestaltung bildet ein Bauelement der Verschiebeeinheit eine Baueinheit mit dem Schwingungsdämpfer. Insbesondere weist in einer weiteren Ausgestaltung der Schwingungsdämpfer eine Längsverzahnung für den axialen Längenausgleich auf. Es hat sich dabei als vorteilhaft erwiesen, die Verschiebeeinheit oder zumindest ein Bauelement dieser als Baueinheit mit dem Schwingungsdämpfer auszuführen, indem beispielsweise die Außenverzahnung oder in bevorzugter Weise die Innenverzahnung an einem Wellenteil des Schwingungsdämpfers vorgesehen wird, so dass die Anzahl der Wellenbauteile beispielsweise auf drei verringert werden kann und die Anzahl der Unterbrechungen der Welle zugunsten einer Stabilität dieser minimiert werden kann.

Die Erfindung wird anhand der in den Figuren dargestellten Ausführungsbeispiele näher erläutert. Dabei zeigen:
Fig. 1: eine teilgeschnittene Ansicht durch eine Antriebswelle mit einem erfindungsgemäßen Schwingungsdämpfer,
Fig. 2: eine teilgeschnittene Ansicht durch eine Antriebswelle mit einem erfindungsgemäßen Schwingungsdämpfer in einer weiteren Ausgestaltung,
Fig. 3: einen Querschnitt durch eine erste Variante des erfindungsgemäßen Schwingungsdämpfers,
Fig. 4: einen Querschnitt durch eine zweite Variante des erfindungsgemäßen Schwingungsdämpfers,
Fig. 5: einen Querschnitt durch eine Variante des Dämpfungsteils,
Fign. 6, 6a: einen Querschnitt durch eine weitere Variante des Dämpfungsteils mit einem vergrößerten Ausschnitt,
Fign. 7, 7a: einen Querschnitt durch eine zusätzliche Variante des Dämpfungsteils mit einem vergrößerten Ausschnitt,
Fign. 8, 8a: einen Querschnitt durch eine zusätzliche Variante des Dämpfungsteils mit einem vergrößerten Ausschnitt,
Fig. 9: einen Querschnitt durch eine ergänzende Variante des Dämpfungsteils,
Fign. 10, 10a: eine räumliche Darstellung eines Dämpfungsteils und ein vergrößerter Ausschnitt,
Fign. 11, 11 a: eine räumliche Darstellung einer anderen Ausgestaltung eines Dämpfungsteils mit einem vergrößerten Ausschnitt,
Fig. 12: eine räumliche Darstellung einer weiteren Ausgestaltung eines Dämpfungsteils, und
Fig. 13: eine räumliche Darstellung einer zusätzlichen Ausgestaltung eines Dämpfungsteils.

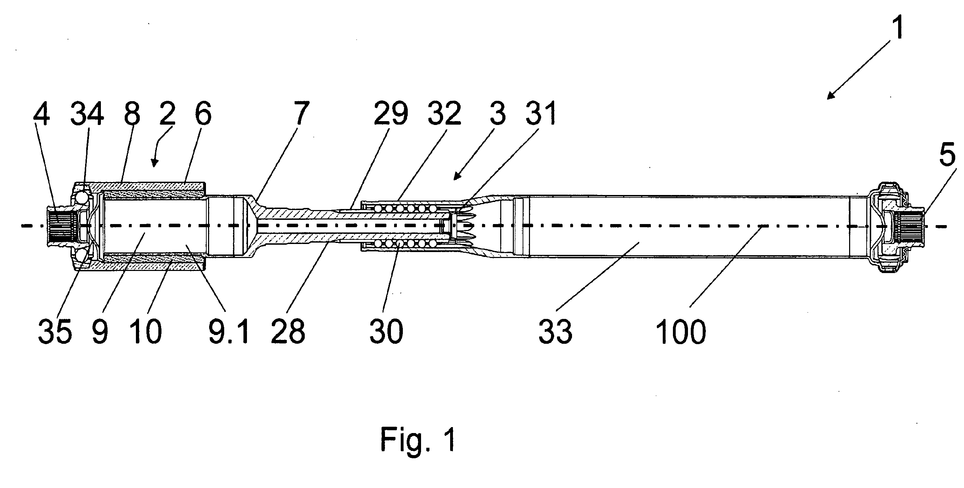

Die Fig. 1 zeigt die Antriebswelle 1 mit dem Schwingungsdämpfer 2 und der linearen Verschiebeeinheit 3 und der Dreh- oder Längsachse 100. Die Antriebswelle 1 weist jeweils an ihren Enden Verbindungsteile 4, 5 in Form von Innenverzahnungen auf, mittels derer ein drehschlüssiger Anschluss an weitere - nicht dargestellte - Anschlussbauteile wie beispielsweise Radnaben oder ein Differenzial einerseits und getriebeseitigen Teilen wie einer Getriebeausgangswelle andererseits ermöglicht wird.

Der Schwingungsdämpfer 2 ist mittels der ersten und zweiten Wellenteile 6, 7 in die Antriebswelle 1 integriert. Das erste Wellenteil 6 ist als Hülse 8 ausgebildet, in das axial das Innenteil 9 - bzw. insbesondere der Endbereich 9.1 des Innenteils 9 - des zweiten Wellenteils 7 eingebracht ist. Radial zwischen der Hülse 8 und dem Innenteil 9 ist das Dämpfungsteil 10 angeordnet, das elastisch ausgebildet ist, beziehungsweise elastische Elemente enthält. Hülse 8 und Innenteil 9 weisen Drehmitnahmen für das Dämpfungsteil 10 auf, so dass das über die Antriebswelle 1 zu übertragende Drehmoment übertragen wird und Spitzenmomente wie bei Antriebsrucken, Drehschwingungen und dergleichen gefiltert werden, indem die Spitzenmomente eine Zwischenspeicherung und/oder eine Vernichtung durch Umformung in Wärme in dem Dämpfungsteil bewirken. Infolge der in der Regel nicht bauraumkritischen axialen Erstreckung des Schwingungsdämpfers 2 kann der Außenumfang der Hülse 8 soweit beschränkt werden, dass er nur unwesentlich über dem übrigen Durchmesser der Antriebswelle liegt. Spezielle Ausführungen können einen im Wesentlichen gleichen Durchmesser aufweisen.

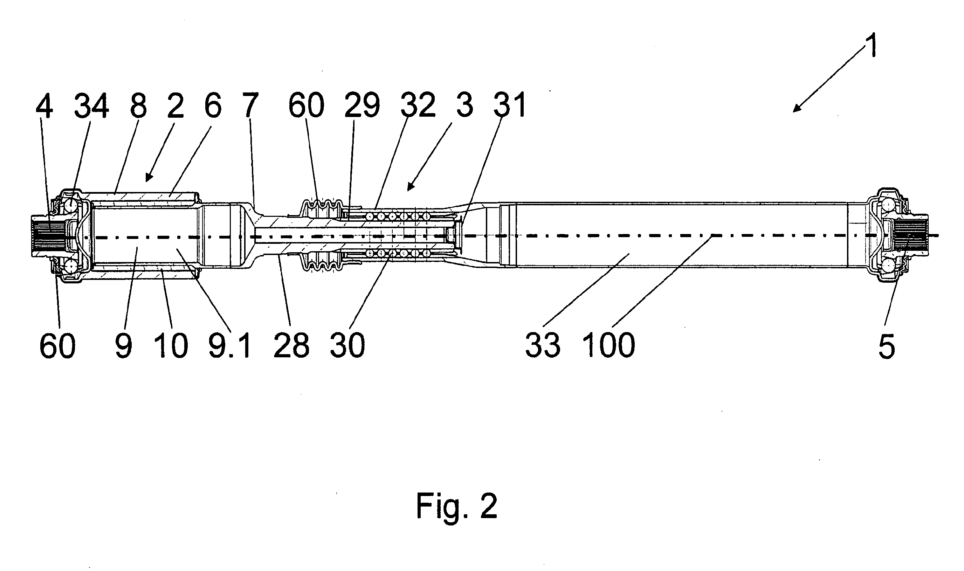

In der Fig. 2 ist eine weitere Ausgestaltung einer Antriebswelle 1 dargestellt, wobei hier insbesondere Dichtungen 60 vorgesehen sind.

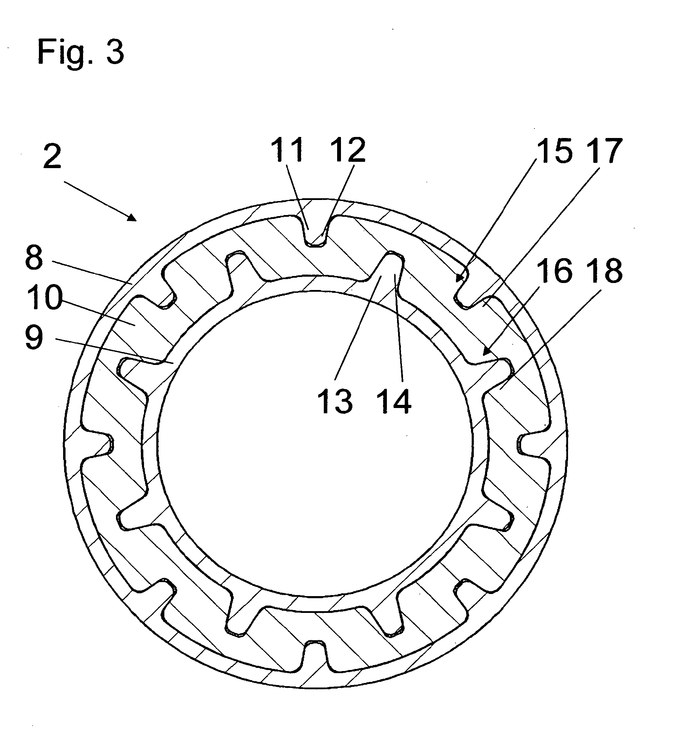

Die Fig. 3 zeigt zur Verdeutlichung des Aufbaus des Schwingungsdämpfers 2 einen Querschnitt durch diesen mit der Hülse 8 und dem Innenteil 9 und dem radial dazwischen angeordneten Dämpfungsteil 10. Die beispielsweise aus einem Metall bestehende und beispielsweise aus einem entsprechend geformtem Rohrmaterial hergestellte Hülse 8 weist Drehmitnahmen 11 auf, die in dem gezeigten Ausführungsbeispiel in Form von radial nach innen und axial längs der Hülse 8 erstreckter, rippenförmiger Längsrippen 12 ausgestaltet sind und aus Gründen einer günstigen Herstellung nicht radial bis zum Innenteil 9 erstreckt sind. Über den Umfang versetzt sind an dem Innenteil 9 nach radial außen gerichtete Drehmitnahmen 13 in Form von Längsrippen 14 vorgesehen. In dem gezeigten Ausführungsbeispiel sind jeweils acht über den Umfang verteilte Längsrippen 12, 14 vorgesehen. In diesen Längsrippen 12, 14 ist das Dämpfungsteil 10 drehschlüssig aufgenommen, wobei dieses über entsprechende Negativprofile 15, 16 verfügt, die hier aus Längsnuten 17, 18 gebildet sind, die jeweils auf die Längsrippen 12, 14 geschoben werden.

Es versteht sich von selbst, dass eine beliebige andere Anzahl von Längsrippen vorgesehen werden kann, um geometrische Anforderungen zu erfüllen und/oder zur Einstellung einer bestimmten Flächenpressung bei gegebenen zu übertragenden Momenten.

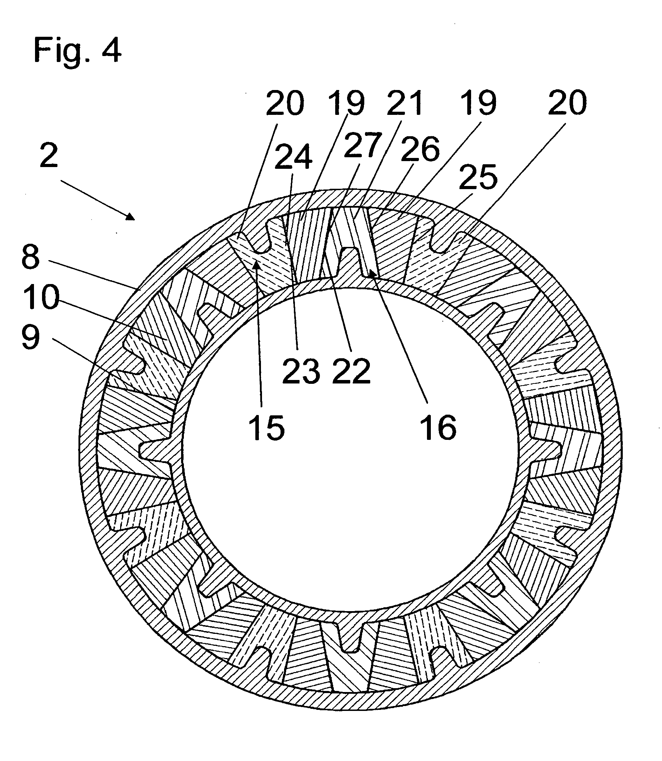

In besonders vorteilhafter Ausführung zeigt der Schwingungsdämpfer 2 der Fig. 4 einen Schichtaufbau des Dämpfungsteils 10, bei dem über den Umfang abwechselnd Schichten 19, 20, 21 wie Streifen bestehend aus elastischen Stoffen oder Materialien unterschiedlicher Elastizität verwendet werden. Hierbei kann die elastischere Schicht ein weicher Kunststoff wie beispielsweise ein Elastomer, eine Gummimischung oder dergleichen oder eine Mischung daraus sein. Ein oder mehrere weniger elastische Stoffe können ein Leichtmetall, ein Kunststoff, beispielsweise ein Elastomer mit geringerer Elastizität, ein Thermoplast oder dergleichen sein, wobei die Kunststoffe entsprechend mit Fasern oder anderen Beimengungen verstärkt sein können. Das Dämpfungsteil 10 ist hierbei bevorzugt einteilig durch Stoffschluss, beispielsweise durch ein Zwei-Komponenten-Spritzgussverfahren, Kleben oder gegebenenfalls Gummi-Metall-Verbindungen oder Formschluss gebildet. Die Schichten 20, 21 können auch aus demselben Stoff gebildet sein.

Die weniger elastischen Schichten 20, 21 bilden die Negativprofile 15, 16 aus, während die elastischeren Schichten 19 mit ihren Grenzflächen 22, 23 flächig an den Gegenflächen 24, 25, 26, 27 der Schichten 20, 21 anliegen. Auf diese Weise bilden die Längsnuten 17, 18 infolge ihrer geringeren Elastizität abriebfeste Flächen mit hoher Flächenpressung mit den Längsrippen 12, 14 aus, während die Flächenpressungen der Grenzflächen 22, 23 der Schichten 19 wegen ihrer größeren Fläche eine geringere Flächenpressung zu den Gegenflächen 24, 25, 26, 27 ausbilden und daher die Schichten 20, 21 in wirksamer Weise vor Verschleiß geschützt werden, so dass ein langzeitfester Schwingungsdämpfer 2 mit hohen übertragbaren Drehmomenten vorgeschlagen werden kann.

Wie aus der Fig. 1 hervorgeht, ist in den Schwingungsdämpfer 2 ein Gleichlaufgelenk 34 integriert, das geschmiert sein kann. Zur Verhinderung eines Austretens von Schmiermittel in Richtung des Dämpfungsteils 10 ist zwischen diesem und dem Gleichlaufgelenk 34 die Dichtscheibe 35 angeordnet.

Zur Bildung der Verschiebeeinheit 3 ist einteilig am Innenteil 9 des Schwingungsdämpfers 2 ein axialer Fortsatz 28 ausgebildet, der radial außen eine Längsverzahnung 29 zur Aufnahme von Wälzkörpern 30 aufweist, die mit der Innenverzahnung 31 des hülsenförmigen Ansatzes 32 des Wellenteils 33 axial verschiebbar angeordnet ist.

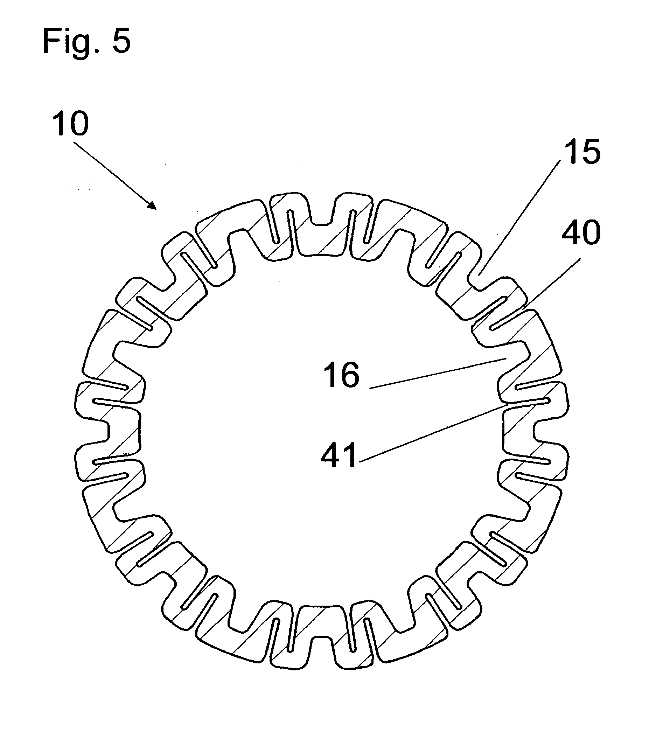

Im Dämpfungsteil 10 der Fig. 5 sind zwischen zwei Negativprofilen 15, 16 jeweils zwei Aussparungen 40, 41 vorgesehen. Dabei öffnen sich die Negativprofile 15, 16 und die Aussparungen 40, 41 jeweils direkt miteinander abwechselnd in unterschiedliche Richtungen. D.h. auf ein Negativprofil 15, das sich nach außen, also in Richtung der - hier nicht dargestellten - Hülse öffnet, folgt eine sich nach innen öffnende Aussparung 41, der eine sich nach außen öffnende Aussparung 40 folgt. Daran schließt sich dann um den Umfang des Dämpfungsteils 10 herum ein sich nach innen öffnendes Negativprofil 16 an. Die Negativprofile 15, 16 sind dabei in dieser Ausgestaltung deutlich breiter als die Aussparungen 40, 41 ausgestaltet. Der Vorteil solcher Aussparungen 40, 41 oder Schlitze besteht darin, dass die Verdrehsteifigkeit und die Dämpfung eingestellt werden kann. Für die Ausgestaltung ist dabei insbesondere darauf zu achten, dass Bereiche, in denen hohe Spannungen auftreten, sich nicht oder im Wesentlichen nicht mit anderen Funktionsbereichen wie z.B. den Mitnehmernuten der Negativprofile 15, 16 überschneiden. Allgemein lässt sich somit durch die Aussparungen 40, 41, insbesondere durch deren Geometrie und Anzahl, oder z.B. auch durch die noch zu beschreibenden Ringe oder Elemente mit unterschiedlicher Steifigkeit die Charakteristik des Dämpfungsteils 10 und somit auch des gesamten Entkopplungselements gezielt beeinflussen. Es hat sich gezeigt, dass in dem Fall, dass mindestens zwei Aussparungen zwischen zwei Negativprofilen vorgesehen sind, der Bereich zwischen den Aussparungen auf Biegung belastet wird, so dass relativ große Wege bei relativ geringen Spannungen erreicht werden können. Haben die Negativprofile 15, 16 eine geringere Tiefe als die Aussparungen 40, 41, d.h. liegen sie höher in Richtung der jeweiligen Außenfläche des Dämpfungsteils 10, so liegen sie außerhalb der beanspruchten Zone und es ergeben sich nur geringe Spannungen. Damit lässt sich vorzeitiges Entstehen von Verdrehspiel durch Kriechen verhindern. Bei Drehmomentbeaufschlagung wird eine Seite auf Druck- und eine Seite auf Zug belastet, wodurch die Last aufgeteilt wird. Gleichzeitig wird bei Drehmomentbeaufschlagung ein relativ großes Volumen des Dämpfungsteils gedehnt bzw. gestaucht, was zu größerer Absorption von Verformungsenergie führt, woraus sich eine höhere Dämpfung ergibt.

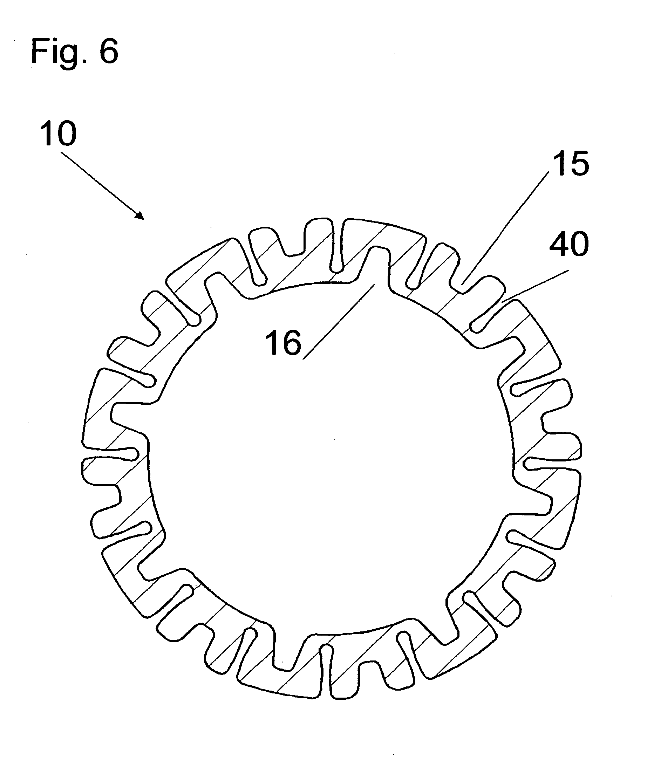

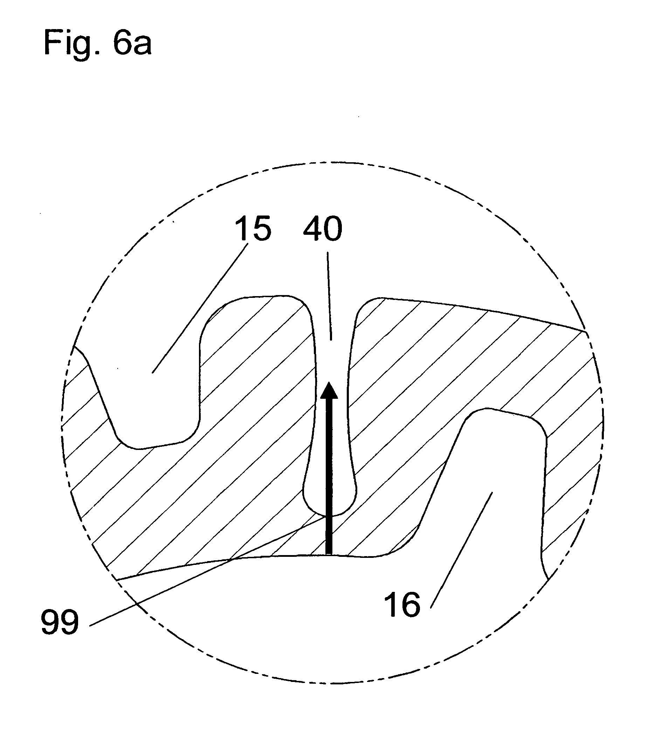

Das Dämpfungsteil 10 der in der Fig. 6 dargestellten Variante verfügt nur über Aussparungen 40, in sich nach außen, d.h. in Richtung der Hülse öffnen. Durch die Aussparungen 40 in dieser Ausgestaltungen werden Spannungsspitzen infolge der auftretenden Belastung reduziert, so dass sich die Dauerfestigkeit erhöht. Wie besonders im vergrößerten Ausschnitt der Fig. 6a zu sehen ist, weisen die Aussparungen 40 in Richtung ihres Grundes, d.h. in Richtung des - hier nicht dargestellten - Innenteils eine leichte Verbreiterung auf. Weiterhin verlaufen die Aussparungen 40 im Wesentlichen in Richtung der Flächennormalen 99 des Dämpfungsteils 10, welches hier ausgehend vom inneren Rand des Dämpfungsteils 10 eingezeichnet ist.

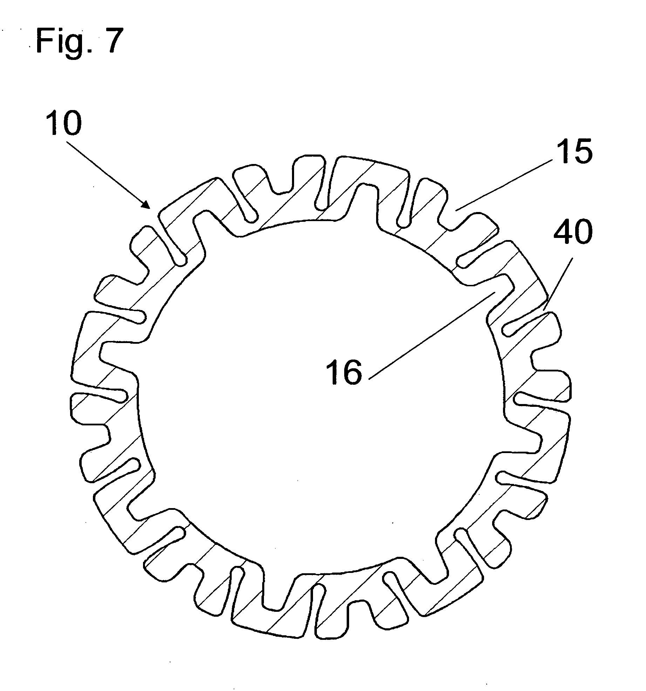

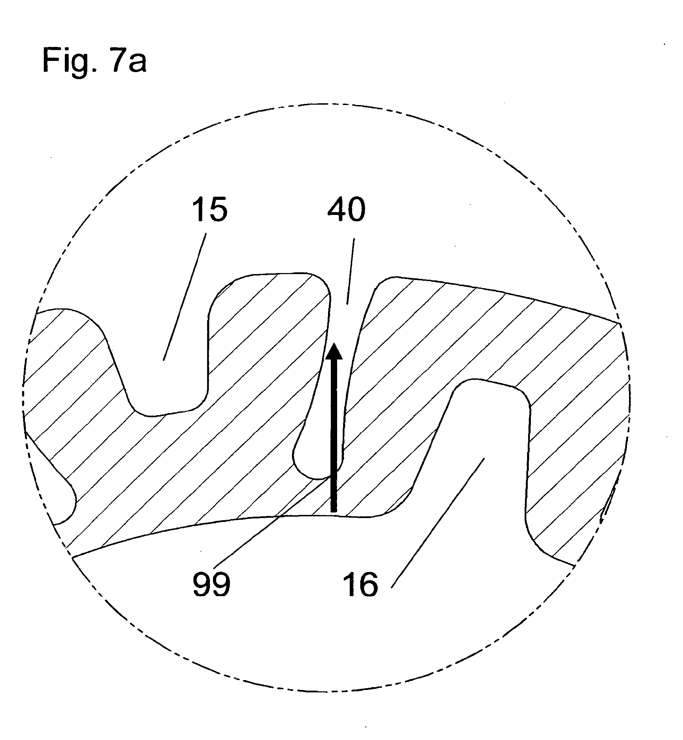

In der Variante der Fig. 7 bzw. dem vergrößerten Ausschnitt der Fig. 7a ist zu sehen, dass die Aussparungen 40 zur Flächennormalen 99 geneigt sind und insbesondere auf den Bereich unterhalb der Negativprofile 15 zielen, welche sich nach außen, d.h. in Richtung der - hier nicht dargestellten - Hülse öffnen. Bei diesen geneigten Aussparungen 40 wird im Fall von kurzfristigen Lastspitzen insbesondere eine Überlastung des Materials des Dämpfungsteils 10 vermieden, indem die Aussparungen 40 durch die Last geschlossen werden und die zu übertragenden Kräfte durch diese Auflageflächen verlaufen.

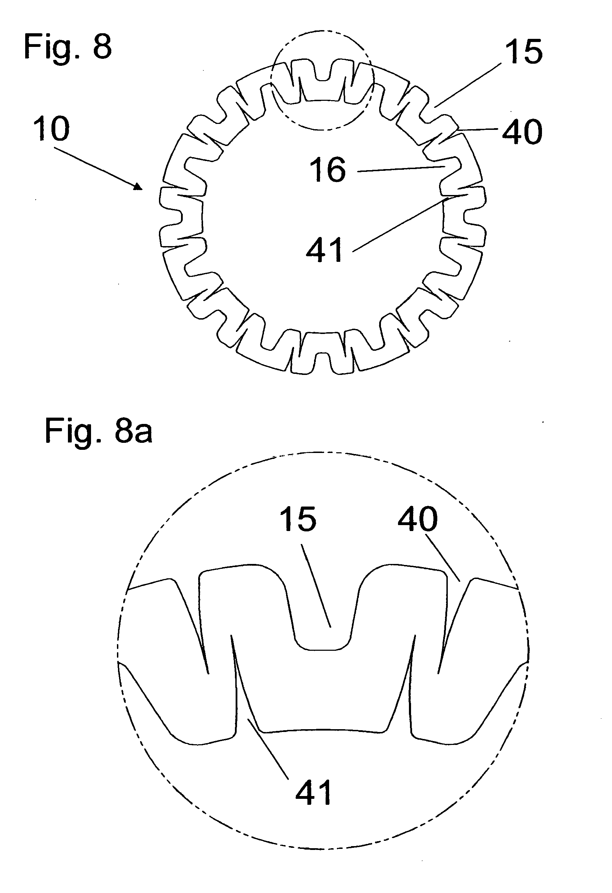

Hatten die Aussparungen 40, 41 der vorhergehenden Varianten eine im Wesentlichen konstante Breite, so zeigen die Fig. 8 und deren vergrößerter Ausschnitt der Fig. 8a eine Variante, in welcher sich die Aussparungen 40, 41 in Richtung ihrer Öffnung verbreiten bzw. in den sie in Richtung ihres Grundes schmäler bzw. enger werden. Diese Aussparungen 40, 41 werden unter Belastung vom Grund her aus stetig geschlossen. Zur Reduktion der Kerbwirkung im Aussparungsgrund kann dieser zusätzlich noch mit einer Entlastungsbohrung versehen werden.

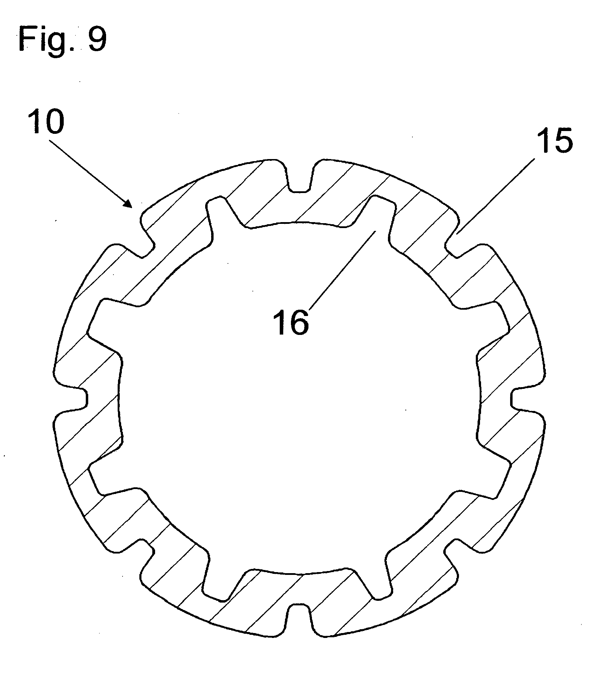

Die Variante der Fig. 9 verdeutlicht die Ausgestaltung der Negativprofile 15, 16. Dabei kann dieses Dämpfungsteil 10 entsprechend auch mit Aussparungen versehen sein. Dies ist für die Übersichtlichkeit hier nicht erfolgt. Die Negativprofile 15, 16 weisen unterschiedliche Breiten auf. Dies ist bezogen darauf, ob sich die Negativprofile 15 in Richtung Hülse oder 16 Innenteil öffnen oder auch bezogen auf die Negativprofile, die sich in die gleiche Richtung, hier insbesondere in Richtung des Innenteils, öffnen. Diese unterschiedlich breiten Negativprofile 15 geraten bei Belastung nacheinander und in Abhängigkeit vom zunehmenden Verdrehungswinkel zwischen Innenteil und Hülse in Kontakt mit dem Innenteil bzw. dessen Mitnehmelementen.

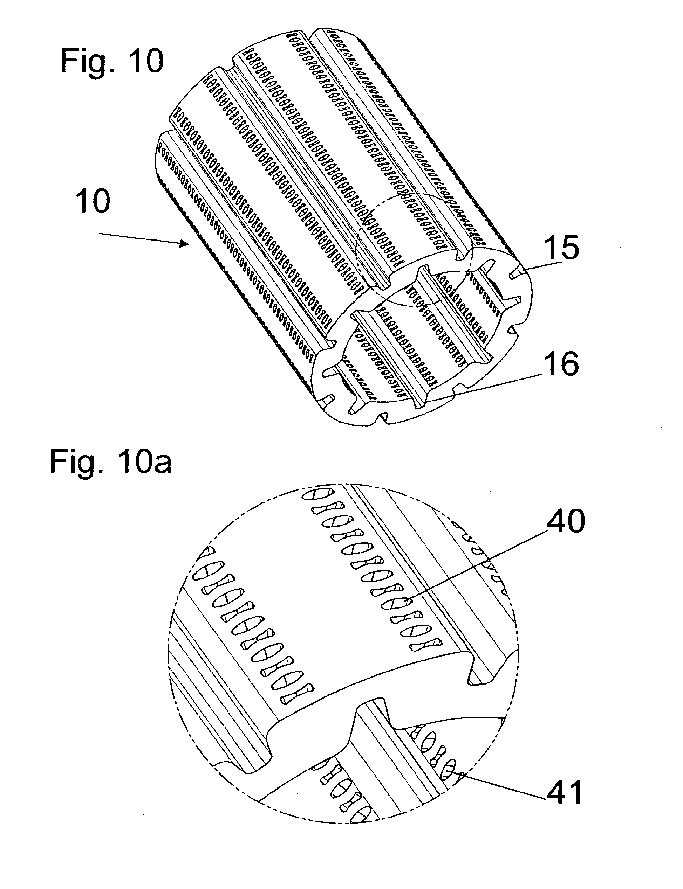

Die Aussparungen 40, 41 der Variante der Fig. 10 und des vergrößerten Ausschnitts der Fig. 10a sind radial durch die Wandung des Dämpfungsteils 10 durchgehend, so dass sich gekrümmte Materialstege des Dämpfungsteils 10 ergeben. Unter Belastung können diese Materialstege dann seitlich ausknicken. Ein Schutz gegen Überlast lässt sich weiterhin dadurch vorsehen, dass die ausgeknickten Materialstege an ihrem jeweiligen Nachbarsteg anliegen. Im hier gezeigten Beispiel sind die Aussparungen im Querschnitt beidseitig konkav bzw. konvex ausgestaltet.

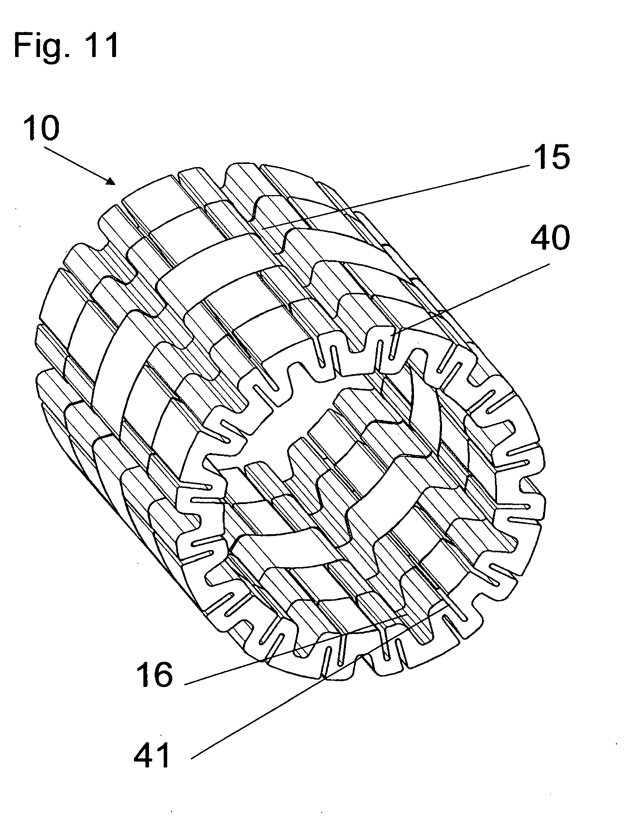

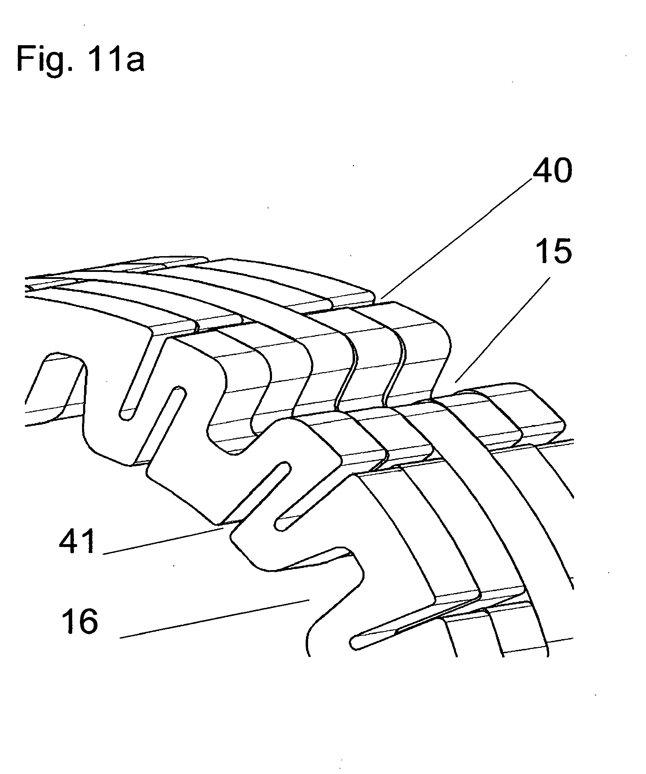

Die Fig. 11 und deren vergrößerter Ausschnitt in der Fig. 11 a zeigen ein Dämpfungsteil 10, welches aus hintereinander angeordneten Ringen besteht. In diesem Beispiel sind fünf Ringe vorgesehen. Diese Ringe können dabei im Wesentlichen gleiche Materialeigenschaften oder auch unterschiedliche, z.B. unterschiedliche Steifigkeiten aufweisen. Die Ringe sind hier derartig ausgestaltet, dass sich die durchgehenden Negativprofile 15, 16 ergeben. Wie besonders in der Vergrößerung der Fig. 11a zu erkennen, fehlen dem mittleren Ring die Aussparungen, so dass die Aussparungen 40, 41 des Dämpfungsteils 10 insgesamt nicht durchgehend, sondern unterbrochen sind. In weiteren Ausgestaltungen sind auch die anderen Ringe mit unterschiedlichen Geometrien versehen. Überdies ist es durch die Ausgestaltung der Breiten der Negativprofile 15, 16 möglich, den Eingriff der einzelnen Ringe abhängig vom Verdrehwinkel und somit der Belastung einzustellen. Ein Vorteil des Aufbaus aus Ringen bzw. aus Streifen (Fig. 4) liegt darin, dass sich so unterschiedliche Materialien kombinieren lassen, ohne dass komplexe Herstellprozesse erforderlich sind. Auch ist so eine Umsetzung des Baukastenprinzips möglich, so dass sich eine große Variantenvielfalt mit wenig verschiedenen Teilen einstellen lässt.

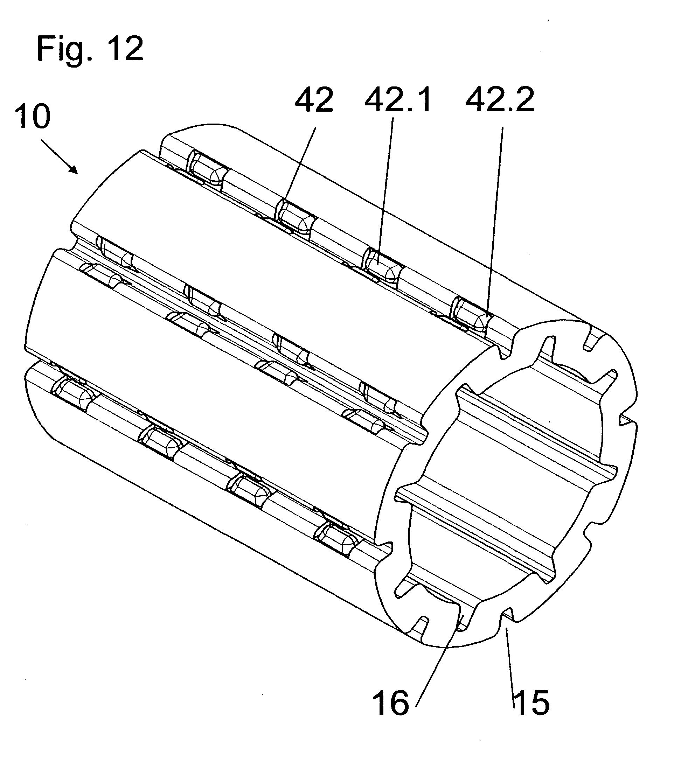

In dem Dämpfungsteil 10 der Fig. 12 sind die Aussparungen 42 als Taschen ausgestaltet, welche sich seitlich an die Negativprofile 15 anschließen, welche sich nach außen, d.h. im eingebauten Zustand in Richtung der Hülse öffnen. Diese Aussparungen 42 in den Seitenwänden der Negativprofile 15 sind hier mit einem Füllmaterial 42.1 ausgefüllt, wobei das Füllmaterial 42.1 in diesem Beispiel weicher als das Material des Dämpfungsteils 10 ist. Die Aussparungen 42 weisen zudem noch einen Verdrängungsraum 42.2 auf, in welchen das Füllmaterial 42.1 während einer Belastung gedrückt wird.

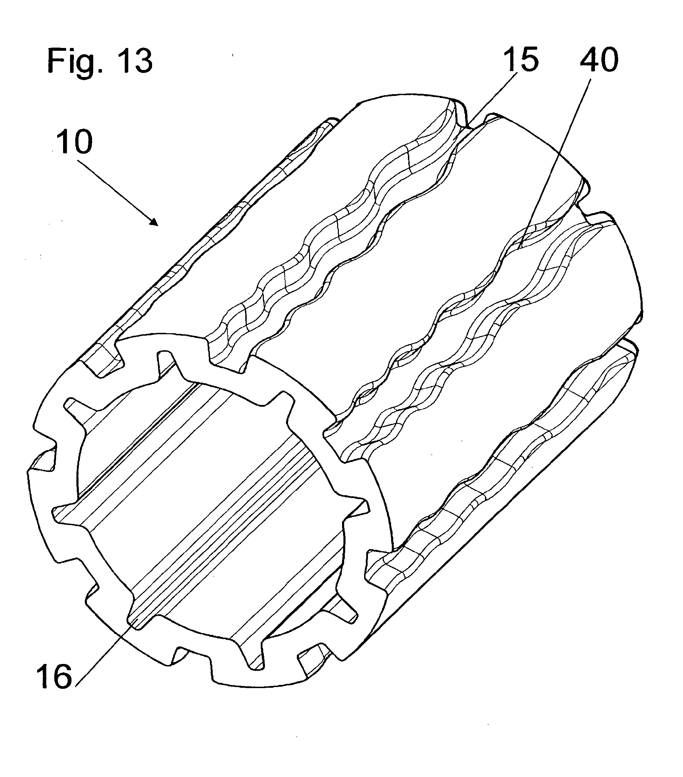

Das Dämpfungsteil 10 der Fig. 13 verfügt über wellenförmige Negativprofile 15, d.h. die Seitenwände der Negativprofile 15 weichen in axialer Richtung, d.h. längs der Drehachse von einem gerade Verlauf ab. Somit ergeben sich die Aussparungen 40 zugleich aus der Abweichung. Die Wellenform führt dazu, dass im unbelasteten Zustand Linienkontakt besteht, der mit steigender Last zu einer immer größer werdenden Fläche wird.

Allgemein kann bei allen Ausgestaltungen bei den Flächen, die bei Kraftübertragung in Kontakt kommen, eine Beschichtung mit einem weichen Material, insbesondere einem weicheren Material als das des Dämpfungsteils vorgesehen sein. Dadurch führt ein Kontakt nicht zu einem harten Übergang in der Kennlinie.

Die Ausgestaltungen weisen Dämpfungsteile auf, die einstückig sind oder aus Ringen oder aus radial nebeneinander angeordneten Streifen bestehen. Dabei kann es sich um identische oder unterschiedliche Materialien handeln. Überdies sind zum Teil Aussparungen vorgesehen, die für ein Dämpfungsteil im Wesentlichen gleich oder unterschiedlich sind. Alle Ausgestaltungen lassen sich dabei insbesondere miteinander kombinieren.

## Patentansprüche

1. Schwingungsdämpfer (2) für eine Antriebswelle (1) eines Antriebsstrangs mit einem ersten Wellenteil (6) und einem zweiten Wellenteil (7) sowie einem zwischen den Wellenteilen (6, 7) angeordneten elastisch verformbaren Dämpfungsteil (10), das jeweils drehschlüssig von den beiden Wellenteilen (6, 7) beaufschlagt wird,
wobei das erste Wellenteil (6) eine Hülse (8) mit nach radial innen gerichteten Drehmitnahmen (11) für das Dämpfungsteil (10) aufweist,
wobei das zweite Wellenteil (7) ein Innenteil (9) mit nach radial außen gerichteten Drehmitnahmen (13) für das Dämpfungsteil (10) aufweist,
wobei die Hülse (8) und das Innenteil (9) derartig ausgestaltet und aufeinander abgestimmt sind, dass das Innenteil (9) mit einem Endbereich (9.1) von der Hülse (8) umfasst ist,
wobei das Dämpfungsteil (10) radial zwischen Hülse (8) und Innenteil (9) angeordnet ist,
wobei das Dämpfungsteil (10) radial um den Endbereich (9.1) des Innenteils (9) herum angeordnet ist, und
wobei das Dämpfungsteil (10) Negativprofile (15, 16) aufweist, in die die Drehmitnahmen (11, 13) eingreifen,
**dadurch gekennzeichnet,**
**dass** das Dämpfungsteil (10) in Schichtbauweise aus zumindest zwei über den Umfang abwechselnden Schichten (19, 20, 21) unterschiedlicher Elastizität gebildet ist,
und/oder
**dass** das Dämpfungsteil (10) aus zumindest zwei axial hintereinander angeordneten Ringen (41) gebildet ist, welche unterschiedliche Elastizitäten aufweisen.

2. Schwingungsdämpfer (2) nach Anspruch 1,
**dadurch gekennzeichnet,**
**dass** das Dämpfungsteil (10) zusätzlich zu den Negativprofilen (15, 16) Aussparungen (40, 41, 42) aufweist.

3. Schwingungsdämpfer (2) nach Anspruch 2,
**dadurch gekennzeichnet,**
**dass** zumindest ein Teil der Negativprofile (15, 16) zumindest abschnittsweise eine in axialer Richtung wellenförmige Struktur aufweist.

4. Schwingungsdämpfer (2) nach einem der Ansprüche 1 bis 3,
**dadurch gekennzeichnet,**
**dass** eine Schicht (20, 21) geringer Elastizität das Negativprofil (15, 16) aufweist und benachbart zu dieser jeweils eine Schicht (19) höherer Elastizität angeordnet ist.

5. Schwingungsdämpfer (2) nach einem der Ansprüche 1 bis 4,
**dadurch gekennzeichnet,**
**dass** die Drehmitnahmen (11, 13) als sich längs der Drehachse (100) des Schwingungsdämpfers (2) erstreckende Längsrippen (12, 14) ausgebildet sind, die in die als komplementäre Längsnuten (17, 18) des Dämpfungsteils (10) ausgebildeten Negativprofile (15, 16) eingreifen.

6. Antriebswelle (1) mit an jedem Ende angeordneten Verbindungsteilen (4, 5) zur drehschlüssigen Verbindung mit Anschlussbauteilen und einem zwischen diesen angeordneten Schwingungsdämpfer (2) nach einem der Ansprüche 1 bis 5.

## Claims

1. A vibration damper (2) for a drive shaft (1) of a powertrain with a first shaft part (6) and a second shaft part (7) as well as an elastically flexible damper part (10) arranged between the shaft parts (6, 7) that is acted on and rotationally coupled by the two shaft parts (6, 7),
whereby the first shaft part (6) has a sleeve (8) with drive collars (11) aligned radially inward for the damper part (10),
whereby the second shaft part (7) has an inner part (9) with drive collars (13) aligned radially outward for the damper part (10),
whereby the sleeve (8) and the inner part (9) are arranged in such way and matched to each other that the inner part (9) with an end region (9.1) is encircled by the sleeve (8), whereby the damper part (10) is arranged radially between sleeve (8) and inner part (9),
whereby the damper part (10) is arranged radially around the end region (9.1) of the inner part (9), and
whereby the damper part (10) has a negative profile (15, 16) in which the drive collars (11, 13) engage, **characterized in that** the damper part (10) is formed in a layered structure made up of at least two alternating layers (19, 20, 21) of different elasticity over the circumference,
and/or that the damper part (10) is formed from at least two consecutively arranged axial rings (41) which have different elasticities.

2. A vibration damper (2) according to claim 1, **characterized in that** the damper part (10) has recesses (40, 41, 42) in addition to the negative profiles (15, 16).

3. A vibration damper (2) according to claim 2, **characterized in that** at least one part of the negative profile (15, 16) has, in sections at least, a corrugated structure in the axial direction.

4. A vibration damper (2) according to one of claims 1 to 3, **characterized in that** one layer (20, 21) of lower elasticity has the negative profile (15, 16) and one layer (19) of higher elasticity is arranged adjacent to this.

5. A vibration damper (2) according to one of claims 1 to 4, **characterized in that** the drive collars (11, 13) are formed as longitudinal ribs (12, 14) stretching along the rotary axis (100) of the vibration damper (2), which engage in the negative profile (15, 16) formed as complementary longitudinal grooves (17, 18) of the damper part (10).

6. A drive shaft (1) with connecting parts (4, 5) arranged at each end for a rotationally coupled connection with connecting components and a vibration damper (2) arranged between them according to one of claims 1 to 5.

## Revendications

1. Amortisseur de vibrations (2) pour un arbre d'entraînement (1) d'une ligne de transmission, avec une première partie d'arbre (6) et une deuxième partie d'arbre (7), et avec un élément d'amortissement (10) élastiquement déformable qui est disposé entre les parties d'arbre (6, 7) et qui est sollicité en solidarité de rotation par chacune des deux parties d'arbre (6, 7),
sachant que la première partie d'arbre (6) présente un manchon (8) pourvu de tocs d'entraînement en rotation (11) pour l'élément d'amortissement (10) qui sont dirigés radialement vers l'intérieur,
sachant que la deuxième partie d'arbre (7) présente un élément intérieur (9) pourvu de tocs d'entraînement en rotation (13) pour l'élément d'amortissement (10) qui sont dirigés radialement vers l'extérieur,
sachant que le manchon (8) et l'élément intérieur (9) sont conçus et mutuellement adaptés de telle sorte qu'une région terminale (9.1) de l'élément intérieur (9) est entourée par le manchon (8),
sachant que l'élément d'amortissement (10) est disposé radialement entre le manchon (8) et l'élément intérieur (9),
sachant que l'élément d'amortissement (10) est disposé radialement autour de la région terminale (9.1) de l'élément intérieur (9),
et sachant que l'élément d'amortissement (10) présente des profils négatifs (15, 16) dans lesquels s'engagent les tocs d'entraînement en rotation (11, 13),
**caractérisé en ce que** l'élément d'amortissement (10) consiste en une structure stratifiée constituée d'au moins deux couches (19, 20, 21) d'élasticités différentes qui alternent sur le pourtour,
et/ou **en ce que** l'élément d'amortissement (10) est constitué d'au moins deux anneaux (41) disposés en succession axiale qui présentent des élasticités différentes.

2. Amortisseur de vibrations (2) selon la revendication 1, **caractérisé en ce que** l'élément d'amortissement (10) présente des évidements (40, 41, 42) en plus des profils négatifs (15, 16).

3. Amortisseur de vibrations (2) selon la revendication 2, **caractérisé en ce qu'**au moins une partie des profils négatifs (15, 16) présentent au moins sectoriellement une structure ondulée en direction axiale.

4. Amortisseur de vibrations (2) selon l'une des revendications 1 à 3, **caractérisé en ce qu'**une première couche (20, 21) d'élasticité inférieure présente le profil négatif (15, 16), et une couche respective (19) d'élasticité supérieure est disposée au voisinage de ladite première couche.

5. Amortisseur de vibrations (2) selon l'une des revendications 1 à 4, **caractérisé en ce que** les tocs d'entraînement en rotation (11, 13) sont réalisés sous la forme de nervures longitudinales (12, 14) qui s'étendent le long de l'axe de rotation (100) de l'amortisseur de vibrations (2) et qui s'engagent dans les profils négatifs (15, 16) réalisés sous la forme de rainures longitudinales complémentaires (17, 18) de l'élément d'amortissement (10).

6. Arbre d'entraînement (1) avec des parties de liaison (4, 5) disposées à chaque extrémité pour la liaison en solidarité de rotation avec des pièces raccordées, et avec un amortisseur de vibrations (2) selon l'une des revendications 1 à 5 disposé entre ces parties.
